# EUROPEAN PATENT SPECIFICATION

(11) **EP 1 717 094 B1**
(45) Date of publication and mention of the grant of the patent: **03.09.2008**
(21) Application number: 06005905.2
(22) Date of filing: 22.03.2006
(51) Int. Cl.: B60N 2/02

(54) **Power seat operation switch**
Steuerschalter für motorgetriebener Sitz
Commutateur de commande pour siège motorisé

(30) Priority: 28.04.2005 JP 2005160368
(43) Date of publication of application: 02.11.2006
(73) Proprietor: TOYO DENSO KABUSHIKI KAISHA, Minato-ku Tokyo (JP)
(72) Inventor: Sakai, Naohiro Toyo Denso K.K. Technical Center, Tsurugashima-shi Saitama (JP)
(74) Representative: Trossin, Hans-Jürgen

(56) References cited:
- EP-A- 1 340 647
- EP-A1- 1 424 710
- EP-A2- 0 530 509
- DE-A1- 19 729 866
- DE-C1- 10 002 493

## Description

### BACKGROUND OF THE INVENTION

The present invention relates to an operation switch for a power seat in a vehicle, which is used for moving forward/backward, tilting the seat and adjusting the level of the front/back portion of the seat.

EP 0 530 509 A2 and DE 197 29 866 A1 each disclose an operation switch of a power seat in a vehicle, which is formed as an operation switch box provided with a seat reclining switch, seat switches for sliding the seat forward and backward and switches for adjusting the height of the front and rear portion of the seat. This operation switch box is easy to mount but requires the occupant to separately operate each of the switches arranged on the case. Namely, the occupant has to felt for a necessary one of the respective function switches on the switch box and operates it by his or her finger. This operation switch box is not easy to operate and cause incorrect selection of switches.

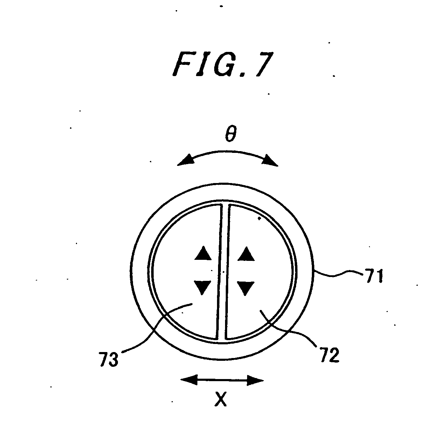

DE 100 02 493 C1 on which the preamble of claim 1 is based shows another power seat operation switch which is featured by improved operability and which comprises a round control grip attached to the side of the power seat which is similar to the embodiment as shown in Fig. 7. This grip 71 allows the occupant to slide the seat forward or backward by moving the grip in the direction X and recline the back of the seat by rotating the grip 71 in the direction θ. This grip 71 is also provided at its top surface with a seesaw type switch 72 for adjusting the level of the front portion of the seat up or down by pressing an upper part or a lower part of the switch and a seesaw switch 73 for adjusting the level of the back portion of the seat up or down by pressing an upper part or a lower part of the switch. This operation switch device allows the occupant to adjust the power seat by operating the control grip in conformity with the movement of the seat.

The above-described power seat switch attached to the side of the power seat in the vehicle allows the occupant to adjust the power seat by moving the control grip in accordance with the movement of the power seat in such a manner that the seat is moved forward and backward by moving the grip forward and backward and the back of the seat is tilted forward and backward by turning the grip to forward and backward. However, the occupant being in the state holding the grip cannot operate the seesaw type switches for adjusting the level of the seat.

### SUMMARY OF THE INVENTION

The above problems are.overcome by an operation switch for a power seat in a vehicle, comprising a main body attached to a side of the power seat, said body being provided thereat with a control grip portion operable to move in a longitudinal direction and a vertical direction relative to the main body and turn forward and backward about a center axis of the main body, wherein the main body incorporates a switch for sliding the power seat forward or backward while moving the grip portion in the longitudinal direction, a switch for reclining a backrest of the seat while turning the grip portion forward or backward, and a switch for tilting the rear part of the seat up or down while moving the grip portion in the vertical direction, characterized in that said control grip portion incorporates in the front part thereof a switch for tilting the front part of the seat up or down while operating upward or downward a knob attached to a front of the grip portion.

The power seat operation switch according to the present invention allows a user to adjust the power seat forward/backward and up/down and reclined to suit the occupant by naturally operating by hand only a grip portion of the operation switch, feeling the high operability of the switch in conformity with movements of the power seat.

### BRIEF DESCRIPTION OF DRAWINGS

Figure 1 is illustrative of the operation of a power seat by using a power seat operation switch according to the present invention.
Figure 2 is a front view of a control grip portion of a power seat operation switch for a vehicle according to the present invention.
Figure 3 is a front view of a control grip portion of a power seat operation switch according to the present invention, which is in the palm of a user's hand for operating the power seat.
Figure 4 is side sectional view of a main body of a power seat operating switch incorporating a switch for tilting a back of the seat and a switch for sliding the seat.
Figure 5 is a plan view of contact portions of the switch structure shown in Fig. 4.
Figure 6 shows driving circuits of driving motors to be operated by corresponding switches of a power seat operation switch according to the present invention.
Figure 7 is a front view of a control grip portion of a conventional operation switch for a power seat for a vehicle.

### PREFERRED EMBODIMENTS OF THE INVENTION

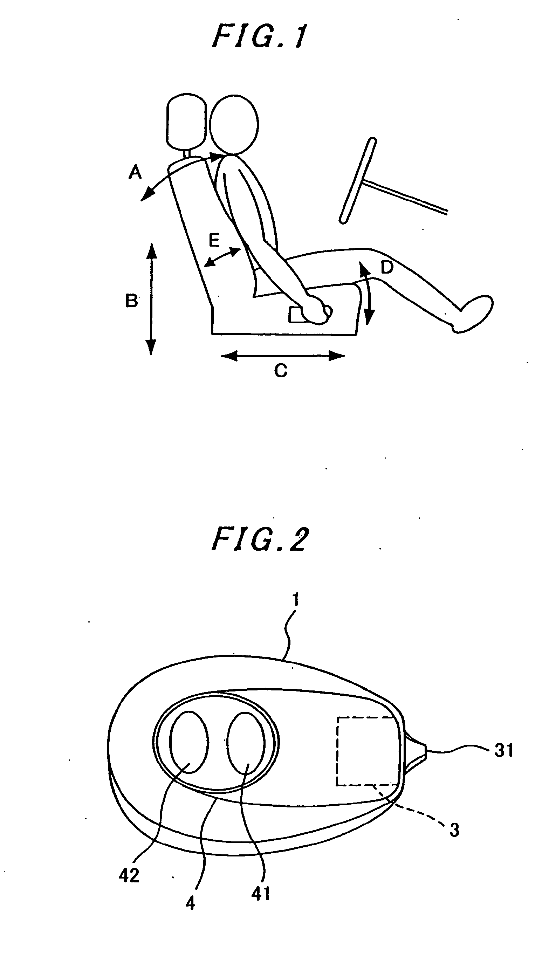

Fig. 1 illustrates movements of a power seat which is operated by using an operation switch according to the present invention. The power seat can be adjusted by using the power operation switch capable of reclining the seat backrest as shown by arrows A, adjusting the seat back portion up and down as shown by arrows B, sliding the seat body forward and backward as shown by arrows C, moving the seat front portion up and down as shown by arrows D and push/draw the seat lumbar support forward/backward as shown by arrows E. Conventional driving mechanisms may be applied for respective movements of the power seat are therefore not shown.

A power seat operation switch according to the present invention has a main body mounted on one side of the power seat and a control grip portion attached to the main body. The control grip portion of the power seat operation switch can be operated in directions forward/backward and upward/downward relative and also turned forward/backward relative to the main body attached to the seat.

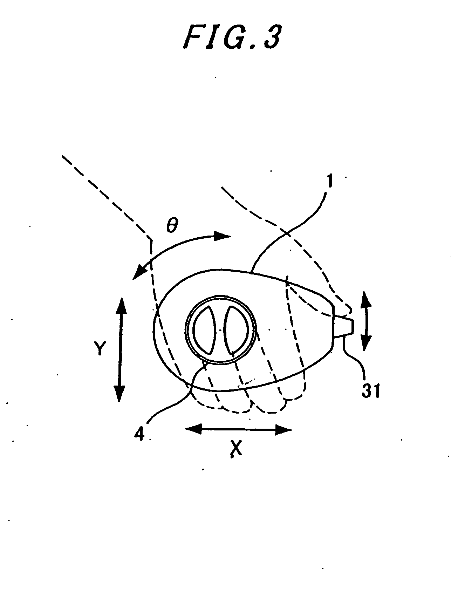

Fig. 2 shows a control grip portion 1 of the operation switch, which has an oval shape viewed from the front. As shown in Fig. 3, the user can grasp the whole grip portion by the palm of his/her hand and move the grip portion in a longitudinal direction X and in a vertical direction Y and rotate the grip portion in a forward/backward direction θ.

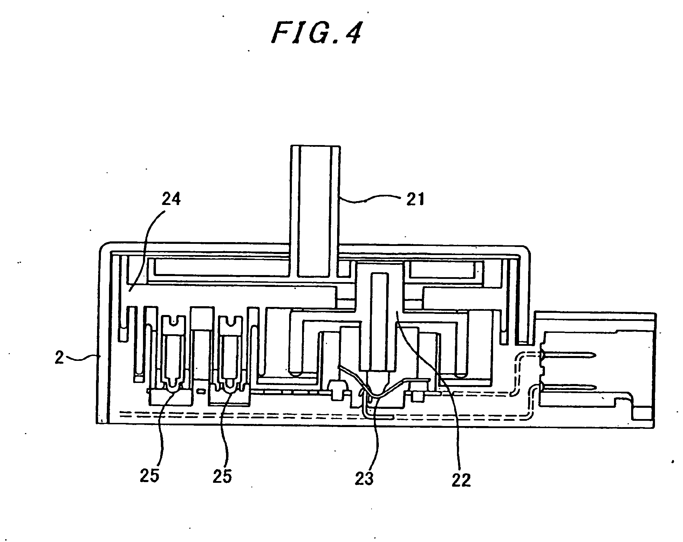

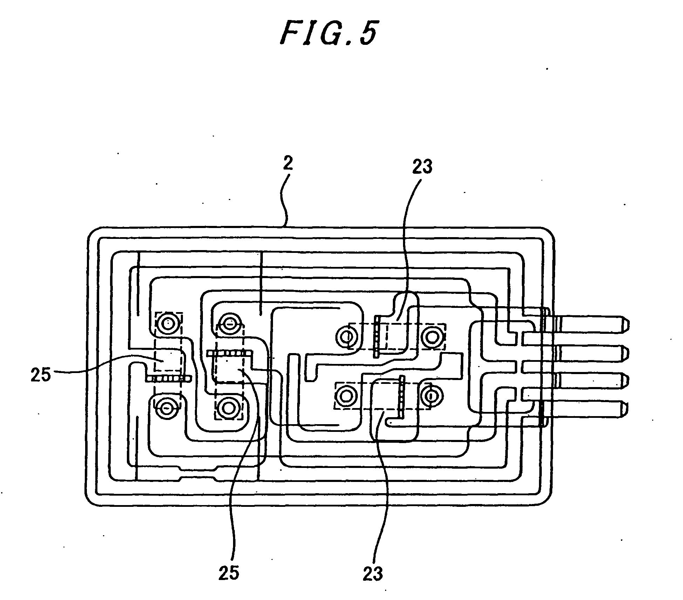

Fig. 4 shows the structure of the power switch body 2 which comprises a switch for rear-portion tilting movement B to raise and lower the rear portion of the seat, a switch for slide movement C to slide the seat forward and backward. Fig. 5 shows contacts of the switches shown in Fig. 4.

Referring to Fig. 4, the fore-and-aft movement of the control grip portion (not shown) mounted on the lever 21 of the operation switch body causes the lever 21 to move and switch on and off paired seesaw type switches 23 through a contactor 22, changing the direction of rotation of a driving motor for sliding the seat.

The up-and-down movement of the control grip portion causes the lever 21 to move and switch on and off paired seesaw type switches 25 through contactor 24, changing the direction of rotation of a driving motor for moving the rear portion of the seat.

Similarly, the forward-and-backward rotational movement of the control grip portion causes a lever (not shown) attached thereto to move and switch on and off paired seesaw type switches, changing the direction of rotation of a driving motor for reclining the seat. This conventional switch structure is also incorporated in the main body of the power seat operating switch.

Referring back to Fig. 2, the control grip portion 1 of the power seat switch incorporates a switch 3 for front portion tilting movement, which operates to raise or lower the front portion of the seat when the user moves up or down a knob 31 of the grip portion 1.

The switches for reclining movement A, the switch for back-portion tilting movement B and the switch 3 for front-portion tilting movement D are designed each to automatically return to its normal neutral position where no operation is made.

In the central part of the grip portion 1, a pair of seesaw type push-button switches 4 is mounted, which has two push buttons 41 and 42 for pushing forward and drawing back a lumbar support of the seat respectively.

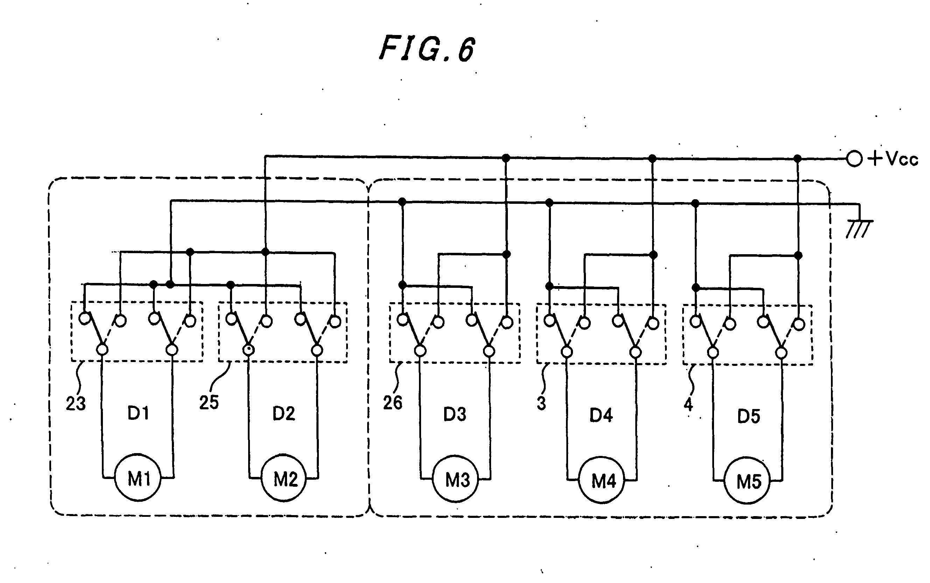

In Fig. 6, there is shown a drive circuit D1 for normally or reversely rotating a motor M1 for sliding the power seat forward or backward in accordance with switching action of paired seesaw type switches 23 in the main body 2 of the power seat operation switch when the control grip portion is operated for the sliding operation C; a drive circuit D2 for normally or reversely rotating a motor M2 for tilting up or down the rear portion of the power seat in accordance with switching action of paired seesaw type switches 25 in the main body 2 of the power seat operation switch when the control grip portion is operated for the rear-portion tilt operation B; a drive circuit D3 for normally or reversely rotating a motor M3 for reclining the backrest of the power seat in accordance with switching action of paired seesaw type switches 26 in the main body 2 of the power seat operation switch when the control grip portion is operated for the reclining operation A; a drive circuit D4 for normally or reversely rotating a motor M4 for tilting up or down the front portion of the power seat in accordance with switching action of a switch 3 when the control grip portion of the operation switch is operated for the front-portion tilting operation D; and a drive circuit D5 for normally or reversely rotating a motor M5 for pushing or drawing the lumber support of the power seat in accordance with switching action of paired button switches 4 of the control grip portion when it is operated for the lumbar support operation E.

In the power seat operation switch for vehicle according to the present invention, the control grip portion 1 may not necessarily be provided at its center part with a pair of push-button switches 4 for adjusting the lumber support.

As is apparent from the foregoing, the power seat operation switch according to the present invention is devised to allow a user to adjust the power seat forward/backward and up/down and reclined to suit the user by naturally operating by hand only a grip portion of the operation switch, feeling the high operability of the switch in conformity with movements of the power seat.

An operation switch for a power seat in vehicle, which allows an occupant to adjust the seat forward/backward, tilt the rear/front part of the seat up/down and recline a backrest of the seat by naturally operating a grip portion and which comprises a main body attached to a side of the seat and a grip portion movable in longitudinal and vertical directions relative to the main body and turnable forward/backward about a center axis of the body, wherein the main body incorporates a switch for sliding the power seat forward or backward while moving the grip portion in the longitudinal direction, a switch for tilting the rear part of the seat up or down while moving the grip portion in the vertical direction, a switch for reclining a backrest of the seat while turning the grip portion forward or backward and a switch for tilting the front part of the seat up or down while operating upward or downward a knob attached to a front of the grip portion.

## Claims

1. An operation switch for a power seat in a vehicle, comprising a main body (2) attachable to a side of the power seat, said body (2) being provided thereat with a control grip portion (1) operable to move in a longitudinal direction (X) and a vertical direction (Y) relative to the main body (2) and turn forward and backward (θ) about a center axis of the main body (2),
wherein the main body (2) incorporates a switch (23) for sliding (C) the power seat forward or backward while moving the grip portion (1) in the longitudinal direction (X), a switch (26) for reclining (A) a backrest of the seat while turning (θ) the grip portion forward or backward, and,
a switch (25) for tilting (B) the rear part of the seat up or down while moving the grip portion in the vertical direction (Y),
**characterized in that** said control grip portion (1) incorporates in the front part thereof a switch (3) for tilting (D) the front part of the seat up or down while operating upward or downward a knob (31) attached to a front of the grip portion (1).

2. An operating switch for a power seat in a vehicle as defined in claim 1, **characterized in that** the control grip portion (1) of the power seat switch has a pair of pushbutton switches (41, 42) arranged at a center part of the grip portion (1) along the longitudinal axis thereof for pushing forward (E) a lumbar support of the power seat while pressing a front one (41) of the paired switches and draw-in the lumbar support while pressing a rear one (42) of the paired switches.

## Patentansprüche

1. Bedienungsschalter für einen motorgetriebenen Sitz in einem Fahrzeug, umfassend:
einen Hauptkörper (2), der an einer Seite des motorgetriebenen Sitzes anbringbar ist, wobei an dem Körper (2) ein Steuergriffabschnitt (1) vorgesehen ist, der zur Bewegung in einer Längsrichtung (X) und in einer vertikalen Richtung (Y) relativ zum Hauptkörper (2) und zum Vorwärts-und Rückwärtsdrehen (θ) um eine Mittelachse des Hauptkörpers (2) bedienbar ist,
worin der Hauptkörper (2) einen Schalter (23) zum Vorwärts- oder Rückwärtsverschieben (C) des motorgetriebenen Sitzes, während der Griffabschnitt (1) in der Längsrichtung (X) bewegt wird, einen Schalter (26) zum Neigen (A) einer Rückenlehne des Sitzes, während der Griffabschnitt vorwärts oder rückwärts gedreht (θ) wird, und einen Schalter (25) zum Auf- oder Abkippen (B) des hinteren Sitzteils, während der Griffabschnitt in der vertikalen Richtung (Y) bewegt wird, enthält,
**dadurch gekennzeichnet, dass** der Steuergriffabschnitt (1) in seinem vorderen Teil einen Schalter (3) zum Auf- oder Abkippen (D) des vorderen Sitzteils, während ein an der Vorderseite des Griffabschnitts (1) angebrachter Knopf (31) aufwärts oder abwärts betätigt wird, enthält.

2. Bedienungsschalter für einen motorgeriebenen Sitz in einem Fahrzeug nach Anspruch 1, **dadurch gekennzeichnet, dass** der Steuergriffabschnitt (1) des motorgetriebenen Sitzschalters ein Paar von Druckknopfschaltem (41, 42) aufweist, die am Mittelteil des Griffabschnitts (1) entlang dessen Längsachse angeordnet sind, um eine Lendenstütze des motorgetriebenen Sitzes nach vorne (E) zu drücken, während ein vorderer (41) des Schalterpaars gedrückt wird, und die Lendenstütze einzuziehen, während ein hinterer (42) des Schalterpaars gedrückt wird.

## Revendications

1. Commutateur de commande pour un siège motorisé dans un véhicule, comprenant un corps principal (2) pouvant être attaché à un côté du siège motorisé, ledit corps (2) étant ainsi équipé d'une partie de poignée de commande (1) pouvant fonctionner de façon à se déplacer dans une direction longitudinale (X) et une direction verticale (Y) par rapport au corps principal (2) et à tourner vers l'avant et vers l'arrière (θ) autour d'un axe central du corps principal (2),
dans lequel le corps principal (2) incorpore un commutateur (23) pour faire glisser (C) est déplacée le siège motorisé vers l'avant ou vers l'arrière pendant que la partie de poignée (1) est déplacée dans la direction longitudinale (X), un commutateur (26) pour incliner (A) un dossier du siège pendant que la partie de poignée est tournée (θ) vers l'avant et vers l'arrière, et un commutateur (25) pour incliner (B) la partie arrière du siège vers le haut ou vers le bas pendant que la partie de poignée est déplacée dans la direction verticale (Y),
**caractérisé en ce que** ladite partie de poignée de commande (1) incorpore dans la partie avant de celle-ci un commutateur (3) pour incliner (D) la partie avant du siège vers le haut ou vers le bas pendant qu'un bouton (31) attaché à une partie avant de la partie de poignée (1) est déplacé vers le haut ou vers le bas.

2. Commutateur de commande pour un siège motorisé dans un véhicule tel que défini selon la revendication 1,
**caractérisé en ce que** la partie de poignée de commande (1) du commutateur de siège motorisé possède une paire de commutateurs de type bouton-poussoir (41, 42) disposés au niveau d'une partie centrale de la partie de poignée (1) le long de l'axe longitudinal de celle-ci de façon à pousser vers l'avant (E) un support lombaire du siège motorisé tout en pressant celui à l'avant (41) des commutateurs par paire et descendre le support lombaire tout en pressant celui à l'arrière (42) des commutateurs par paire.
